# EUROPEAN PATENT SPECIFICATION

(11) **EP 4 083 114 B1**
(45) Date of publication and mention of the grant of the patent: **02.08.2023**
(21) Application number: 21170500.9
(22) Date of filing: 26.04.2021
(51) Int. Cl.: C08J 3/22, C09K 15/04, C09K 15/32, C08K 5/1539, C08K 5/353

(54) **A MASTERBATCH FOR UPGRADING POLYESTERS**
MASTERBATCH ZUR AUFWERTUNG VON POLYESTERN
MÉLANGE MAÎTRE POUR LA MISE À JOUR DE POLYESTERS

(43) Date of publication of application: 02.11.2022
(73) Proprietor: Nexam Chemical AB, 234 35 Lomma (SE)
(72) Inventor: SOLANO, Carlos, 223 53 Lund (SE); PISCIOTTI, Francesco, 247 63 Veberöd (SE); RÖME, Daniel, 222 35 Lund (SE)
(74) Representative: Ström & Gulliksson AB

(56) References cited:
- EP-A1- 2 163 577
- EP-A1- 2 253 659
- WO-A2-2004/101666

## Description

### FIELD OF THE INVENTION

The present invention relates to masterbatch for improving the melt rheology of a thermoplastic polyester. Further, it relates to a method of improving the melt rheology of a thermoplastic polyester.

### BACKGROUND

Upgrading of recycled (i.e. upcycling) thermoplastic polyesters, most typically polyethylene terephthalate (PET), is of interest in the art, as the need for the use of virgin polyester thereby may be dispensed with. Further, improving properties, such as melt rheology e.g. the melt viscosity, of thermoplastic polyesters - be it virgin or recycled thermoplastic polyester - are of interest in applications such as blow molding of e.g. bottles and in foaming to provide light-weight construction core materials for sandwich structures, e.g. for wind turbine rotors. Further, upgraded recycled polyesters and improved virgin polyesters may be processed by a number of different techniques, including, thin or thick wall injection molding, injection-compression molding, injection blow molding, injection stretch blow molding, injection rotational molding, extrusion, extrusion blow molding, sheet extrusion, film extrusion, cast film extrusion, foam extrusion, thermoforming (e.g. into films, trays, blown films, oriented films) and the alike.

Thermoplastic polyesters suffer from having a narrow processing window, thereby typically requiring specialized processing equipment. This is related to the melt rheology of thermoplastic polyesters. Thermoplastic polyesters typically have low melt viscosity, low melt strength and low melt elasticity. This is a consequence of the attainable molecular weight and linear molecular architecture, being limited by the melt viscosity of polyesters commercially produced in melt processes. For extrusion processes, e.g. extrusion of PET foam, the melt strength is a critical parameter.

In short, it would be desirable to allow for recycling of thermoplastic polyesters for use in the same kind of application and not only for downcycling, i.e. use in a less demanding applications. Further, it would also be of interest to allow for use of thermoplastic polyesters in applications typically requiring higher performing, typically more expensive, polymers. Thus, means for improving thermoplastic polyesters are desired in the art.

As reported in EP 2 163 577 B1, upgrading or improvement of PET resins by using chain-extenders, such as compounds comprising tetracarboxylic dianhydrides (e.g. pyromellitic dianhydride - PMDA) dates back at least to the 1990s. In such upgrading processes, low molecular polyester is processed together with multifunctional anhydrides as chain-extender/- brancher by extrusion. It has been concluded that reaction of PET with dianhydrides, particularly PMDA, may be effective in raising the intrinsic viscosity.

However, raising the viscosity of PET by reacting it with PMDA is typically not sufficient on its own, if to ensure adequate melt strength in the polymer for applications of interest, such as extrusion blow-molding or foam extrusion. Thus, EP 2 163 577 B1 teaches combining PMDA with further additives, i.e. sterically hindered phenolic antioxidants and a bisoxazoline, e.g. 1,3-phenyl bisoxazoline or 1,4-phenyl bisoxazoline, to provide a concentrate, i.e. a masterbatch, useful as chain-extending/branching agent. Similarly, the use of PMDA and a bisoxazoline in combination with a poly functional compound comprising at least two non-sterically hindered phenolic hydroxyl groups to alter the melt characteristics of a polyester has been disclosed in WO 2012/120148. Further, the combined use of 5-(3-phenylprop-2-ynoyl)isobenzofuran-1,3-dione (**P**henyl**E**thynyl**T**rimellitic**A**nhydride; PETA) and a bisoxazoline to improve the melt strength of a thermoplastic polymer has been disclosed in EP 3 246 349.

EP 2 253 659 discloses the composition and the preparation of a chain-extending concentrate for production of foamed cellular materials of aromatic polyesters. The chain-extending concentrate is comprised of an ethylene-acrylate copolymer, a high-temperature thermoplastic and a multifunctional compound.

WO 2004/101666 relates to masterbatches useful for modifying thermoplastic polyesters, in particular to masterbatches comprising dispersed polyol branching agent and/or chain coupling agents, such as for example dianhydrides.

Although procedures for melt modification and hence also means for controlling the various viscosity parameters are known in the art, there is still a need for further and preferably improved procedures for melt modification, whereby the properties of PET and related polyesters may be affected and tailored. Especially, it would be of interest to improve the melt rheology of thermoplastic polyesters, e.g. increasing the melt viscosity, increasing the melt strength, and/or increasing the melt elasticity.

### SUMMARY

Consequently, the present invention seeks to mitigate, alleviate, eliminate or circumvent one or more of the above identified deficiencies and disadvantages in the art singly, or in any combination, by providing a masterbatch for improving the melt rheology of thermoplastic polyesters, by increasing the melt viscosity, by increasing the melt strength, and/or by increasing the melt elasticity. While the masterbatch may be used in various thermoplastic polyesters, such as polyethylene terephthalate (PET) or polybutylene terephthalate (PBT), the thermoplastic polyester is typically polyethylene terephthalate (PET). Apart from at least one thermoplastic carrier, the masterbatch comprises a polyanhydride, being a tetracarboxylic dianhydride, such as pyromellitic dianhydride (PMDA), and a secondary antioxidant, being a phosphorous based stabilizer.

As recognized by the skilled person, a masterbatch is a solid additive for plastics used for coloring plastics (color masterbatch) or for imparting other properties to plastics (additive masterbatch). The present masterbatch is an additive masterbatch. An additive masterbatch is a concentrated mixture of additive(s) and a carrier. Typically, the additive(s) are mixed with a carrier in a heat shearing process and subsequently cooled and e.g. cut into a granular shape.

Use of secondary antioxidants in thermoplastic polyesters are in general known in the art. They are typically added in low amounts as process stabilizers to avoid or limit degradation of the thermoplastic polyester during processing.

It has unexpectedly been found that secondary antioxidants being phosphorous based stabilizers, such as tetrakis-(2,4-ditert-butyphenyl)-4,4'-biphenylylen-diphosphonite (also known as P-EPQ), apart from acting as process stabilizer, may act synergistically with a polyanhydride, when used in amounts of the same magnitude as the amount of polyanhydride, to further affect the upgrading of the thermoplastic polyester provided by the polyanhydride. The weight ratio of the polyanhydride and the secondary antioxidant is in the range 5:1 to 1:5. It seems that in higher ratios, the secondary antioxidant, apart from the expected process stabilization and the thereby slower degradation, provides a synergistic effect with the polyanhydride to improve the melt rheology. The secondary antioxidant when used in higher proportions relative the polyanhydride does thus not only affect the degradation but also reactions improving the melt rheology, such as chain-extension, long-chain branching and/or cross-linking.

This is contrary to reports in the art (cf. EP 2 163 577 B1) stating that when organophosphorus thermal stabilizers (being secondary antioxidants) are used as process stabilizers, they should be used in low amounts to avoid the organophosphorus thermal stabilizer interfering with the melt strength enhancing reaction of other additives.

According to an aspect, there is thus provided a masterbatch comprising a polyanhydride, a secondary antioxidant, and at least one thermoplastic carrier. The weight ratio of the polyanhydride and the secondary antioxidant is 5:1 to 1:5, such as 5:1 to 1:1, 1:1 to 1:5, 3:1 to 1:3, 3:1 to 1:1, 1:1 to 1:3, or 2:1 to 1:2.

As appreciated by the skilled person, secondary antioxidants are typically organophosphorus compounds, i.e. phosphorous based stabilizers. Thus, the secondary antioxidant may be a phosphonite, e.g. tetrakis-(2,4-ditert-butyphenyl)-4,4'-biphenylylen-diphosphonite, a phosphite, e.g. (tris(2,4-di-tert-butylphenyl)phosphite) or bis-(2,4-di-tert.-butylphenol)pentaerythritol diphosphite, or a phosphonate.

As recognized in the art, antioxidants comprising sterically hindered phenols, such as 3,3',3',5,5',5'-hexa-tert-butyl-a,a',a'-(mesitylene-2,4,6-triyl)tri-p-cresol and calcium-bis (((3,5-bis(1,1-dimethylethyl)-4-hydroxyphenyl)methyl)-ethylphosphonate), are primary antioxidants.

According to an embodiment, the secondary antioxidant is a phosphonite, such as tetrakis-(2,4-ditert-butyphenyl)-4,4'-biphenylylen-diphosphonite, or 2,2'-ethylidenebis(4,6-di-tert-butylphenyl)fluorophosphonite, as phosphonites has been found to represent a preferred type of secondary antioxidant. Especially, tetrakis-(2,4-ditert-butyphenyl)-4,4'-biphenylylen-diphosphonite is a preferred secondary antioxidant.

Tetrakis-(2,4-ditert-butyphenyl)-4,4'-biphenylylen-diphosphonite, also known as P-EPQ (or PEPQ) in the art, being an organophosphorus compound, is a phosphorus based high performance secondary antioxidant for organic polymers. It is known to reduce the thermo-oxidative degradation of polymers, i.e. it acts as processing stabilizer. Further, it reduces the development of undesired color (e.g. yellowing) during processing.

The polyanhydride in the masterbatch comprises two carboxylic anhydride moieties, such as maleic anhydride or succinic anhydride. Typically, the anhydride moieties are fused on an aromatic ring, which can be the same ring or two connected rings. The most typical example of a polyanhydride to be present in the masterbatch is pyromellitic dianhydride (PMDA). However, also other polyanhydrides, such as 3,3', 4,4'benzophenonetetracarboxylic acid dianhydride (BTDA) may be used.

According to an embodiment, the polyanhydride is selected from the group consisting of pyromellitic dianhydride, benzophenone dianhydride, 2,2-bis (3,4-dicarboxyphenyl) propane dianhydride, 3,3', 4,4'-biphenyltetracarboxylic acid dianhydride, bis (3,4-dicarboxyphenyl) ether dianhydride, bis (3,4-dicarboxyphenyl) thioether dianhydride, bisphenol A bisether dianhydride, 2,2-bis (3,4-dicarboxylphenyl) hexafluoropropane dianhydride, 2,3,6,7-naphtalene-tetracarboxylic acid dianhydride, bis (3,4-dicarboxyphenyl) sulfone dianhydride, 1,2,5,6-naphthalate ne-tetracarvoxylic acid dianhydride, 2,2',3,3'-biphenyltetracarvoxylic acid dianhydride, hydroquinone bisether dianhydride, bis (3,4-dicarboxyphenyl) sulfoxide dianhydride, 3,4,9,10-perylene tetracarboxylic acid dianhydride and blends thereof.

Apart from the polyanhydride and the secondary antioxidant, the masterbatch also comprises a thermoplastic carrier. Typically, the carrier is the major component in the masterbatch. The masterbatch may thus comprise at least 50 wt.% of the carrier, such as 50 to 99 wt.% of the carrier. The content of the carrier in the masterbatch may be at least 70 wt.%, such as in the range 70 to 99 wt.%, such as 80 to 95 wt.%.

The carrier may be selected from the group consisting of polyolefins, e.g. polyethylene and/or polypropylene, ethylene-acrylate copolymers (EMA, EBA, EEA), thermoplastic waxes, polyolefin waxes, polyolefin elastomers, such as Vistamaxx^{™} supplied from ExxonMobil (a propylene based elastomer in an olefinic elastomer: e.g. isotactic propylene with randomly distributed ethylene), polyolefin plastomers, such as QUEO^{™} (alpha olefin co-polymers) supplied from Borealis, MAH-g-polyolefin (maleic anhydride grafted polyolefin), styrenics including but not limit to MAH-copolymer styrenics, polyolefin ionomers, such as ethylene ionomers (copolymers of ethylene and acrylic acid partially neutralized with metal cations, such as sodium, zinc and lithium), polyesters, such as polyethylene terephthalate (PET) and/or polybutylene terephthalate (PBT), co-polymers of polyesters, such as co-polyesters (e.g. PETG; terephthalic acid/ethylene glycol/cyclohexanedimethanol), thermoplastic elastomers, such as polyether esters (e.g. a block co-polymer comprising polyester blocks and polyether blocks), or polyether amides (e.g. a block co-polymer comprising polyamide blocks and polyether blocks). Other examples of carriers are polycarbonate (PC), polystyrene (PS), acrylonitrile butadiene styrene (ABS), ethylene vinyl acetate (EVA). Further, the carrier may be a mixture of two or more of such polymers.

The carrier may be selected from the group consisting of polyolefins, e.g. polyethylene and/or polypropylene, ethylene-acrylate copolymers (EMA, EBA, EEA), thermoplastic waxes, polyolefin waxes, polyolefin elastomers, such as Vistamaxx^{™} supplied from ExxonMobil (a propylene based elastomer in an olefinic elastomer: e.g. isotactic propylene with randomly distributed ethylene), polyolefin plastomers, such as QUEO^{™} (alpha olefin co-polymers) supplied from Borealis, MAH-g-polyolefin (maleic anhydride grafted polyolefin), styrenics including but not limit to MAH-copolymer styrenics, polyolefin ionomers, such as ethylene ionomers (copolymers of ethylene and acrylic acid partially neutralized with metal cations, such as sodium, zinc and lithium), polyesters, such as polyethylene terephthalate (PET) and/or polybutylene terephthalate (PBT), co-polymers of polyesters, such as co-polyesters (e.g. PETG; terephthalic acid/ethylene glycol/cyclohexanedimethanol), thermoplastic elastomers, such as polyether esters (e.g. a block co-polymer comprising polyester blocks and polyether blocks), or polyether amides (e.g. a block co-polymer comprising polyamide blocks and polyether blocks), or a mixture of two or more of such polymers.

The carrier may according to an embodiment be a polyolefin, e.g. polyethylene and/or polypropylene, an ethylene-acrylate copolymer (EMA, EBA, EEA), a thermoplastic wax, a polyolefin waxes, a polyolefin elastomer, such as Vistamaxx^{™} supplied from ExxonMobil (a propylene based elastomer in an olefinic elastomer: e.g. isotactic propylene + randomly distributed ethylene), a polyolefin plastomer, such as QUEO^{™} (alpha olefin co-polymers) supplied from Borealis, a MAH-g-polyolefin (maleic anhydride grafted polyolefin), a styrenic including but not limit to MAH-copolymer styrenics, a polyester, such as polyethylene terephthalate (PET) and/or polybutylene terephthalate (PBT), a co-polyester (e.g. PETG; terephthalic acid/ethylene glycol/cyclohexanedimethanol), or a mixture of two or more such polymers.

The carrier may according to an embodiment be a polyolefin, e.g. polyethylene and/or polypropylene, a polyester, such as polyethylene terephthalate (PET) and/or polybutylene terephthalate (PBT), a co-polyester, such as PETG (terephthalic acid/ethylene/glycol/cyclohexane-dimethanol), a polyether-ester block copolymer, an ethylene-acrylate co-polymer (EMA, EBA, EEA), a polyolefin plastomer, such as QUEO^{™}, or a mixture of two or more such polymers.

As stated herein above, the weight ratio of the polyanhydride and the secondary antioxidant in the masterbatch may be in the range 5:1 to 1:5, such as 5:1 to 1:1, 1:1 to 1:5, 3:1 to 1:3, 3:1 to 1:1, 1:1 to 1:3, or 2:1 to 1:2. Further, the masterbatch comprises 0.05 to 20 wt.% of the polyanhydride. Typically, the masterbatch comprises 0.1 to 15 wt.% of the polyanhydride, such as 1 to 10 wt.% of the polyanhydride. Similarly, the masterbatch comprises 0.05 to 15 wt.% of the secondary antioxidant. Typically, the masterbatch comprises 0.1 to 10 wt.% of the secondary antioxidant, such as 1 to 5 wt.% of the secondary antioxidant.

Apart from polyanhydride and the secondary antioxidant, the masterbatch may optionally comprise further additives. As an example, the masterbatch may comprise a polyoxazoline, typically a bisoxazoline, e.g. 1,3-phenylene-bis-oxazoline (1,3-PBO), or 1,4-phenylene-bis-oxazoline (1,4-PBO). Further, the masterbatch may, in addition to the secondary antioxidant, comprise a sterically hindered phenolic antioxidant. There are various known sterically hindered phenolic antioxidants in the art. According to an embodiment, the masterbatch further comprises 4-((3,5-bis((4-hydroxy-3,5-ditert-butylphenyl)methyl)-2,4,6-trimethylphenyl)methyl)-2,6-ditert-butyl-phenol. Further, the masterbatch may comprise 5-(3-phenylprop-2-ynoyl)isobenzofuran-1,3-dione (**P**henyl**E**thynyl**T**rimellitic**A**nhydride; PETA).

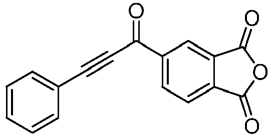

### PETA - PhenylEthynylTrimelliticAnhydride (5-(3-phenylprop-2-ynoyl)isobenzofuran-1,3-dione)

According to an embodiment, the masterbatch comprises a bisoxazoline and PETA.

The bisoxazoline to optionally be comprised in the masterbatch may be a compound according to formula I, 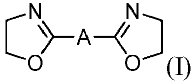 wherein "A" is a bond, meta-phenylene, orpara-phenylene. "A" may also be pyridine-2,6-diyl, but that is less preferred. As an example, the bisoxazoline may be selected from the group consisting 1,3-bis(4,5-dihydrooxazol-2-yl)benzene (1,3-PBO), 1,4-bis(4,5-dihydrooxazol-2-yl)benzene (1,4-PBO), and 2,2'-bis-(2-oxazoline). 2,2'-(1,3-phenylene)bis(4,5-dihydrooxazole), also known as 1,3-phenylene-bis-oxazoline (1,3-PBO), or 1,3-bis(4,5-dihydrooxazol-2-yl)benzene, represents a preferred bisoxazoline.

Further, the bisoxazoline may be replaced with a corresponding bis-5,6-dihydro-4H-1,3-oxazine, i.e. a compound comprising at least two [5,6-dihydro-4H-1,3-oxazine] residues, e.g. 1,3-bis(5,6-dihydro-4*H*-1,3-oxazin-2-yl)benzene, 1,4-bis(5,6-dihydro-4*H*-1,3-oxazin-2-yl)benzene, or 5,5',6,6'-tetrahydro-4H,4'H-2,2'-bi(1,3-oxazine). As recognized by the skilled person, bis-5,6-dihydro-4*H*-1,3-oxazines have in principle the same reactivity as the corresponding bisoxazolines. Various bis-5,6-dihydro-4*H*-1,3-oxazins are thus also useful in the present process. According to an embodiment, the bis-5,6-dihydro-4H-1,3-oxazine is a compound according to formula II, 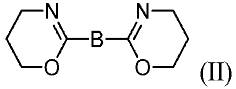 wherein "B" is a bond, meta-phenylene, or para-phenylene. "B" may also be pyridine-2,6-diyl, but that is less preferred.

Further additives that may be added to the masterbatch includes *inter alia* polycarbodiimide and metal deactivators.

With regard to further improve the stability of the masterbatch, it may, apart from the secondary antioxidant, such as PEPQ, comprise one or more primary and/or additional secondary antioxidants. As an example, it may comprise one or more of:
- Irganox 1330 (3,3',3',5,5',5'-hexa-tert-butyl-a,a',a'-(mesitylene-2,4,6-triyl)trip-cresol), sold as Irganox 1330;
- bis-(2,4-di-tert.-butylphenol)pentaerythritol diphosphate, sold as Irgafos 126, if the secondary antioxidant is tetrakis-(2,4-ditert-butyphenyl)-4,4'-biphenylylen-diphosphonite;
- Pentaerythritol tetrakis (3-(3,5-di-tert-butyl-4-hydroxyphenyl)propionate), sold as Irganox 1010;
- Hexamethylene bis(3-(3,5-di-tert.-butyl-4-hydroxyphenyl)propionate, sold as Irganox 259; and
- a blend (sold as Irganox B 561) of (tris(2,4-di-tert-butylphenyl)phosphite) and pentaerythritol tetrakis (3-(3,5-di-tert-butyl-4-hydroxyphenyl)propionate) or the alike synergistic blends.

According to an embodiment, the polyanhydride and the secondary antioxidant are being mixed, e.g. compounded, into the same carrier. The weight ratio of polyanhydride to the secondary antioxidant is fixed in such a masterbatch. Further, compounding in the same carrier ensures equal, uniform distribution of the polyanhydride and the secondary antioxidant. While the polyanhydride and the secondary antioxidant typically are compounded into the carrier, i.e. melt mixed with the carrier, they may, according to some embodiments, be dry blend and cold mixed with carrier. Such a dry mix may be compacted or cold extruded.

According to an alternative embodiment, the masterbatch comprises a first carrier comprising the polyanhydride and a second comprising the secondary antioxidant. According to such an embodiment, the polyanhydride is mixed, e.g. compounded, into the first carrier, and the secondary antioxidant is mixed, e.g. compounded, into the second carrier. A masterbatch may according to such an embodiment be provided by blending the first carrier and the second carrier. Typically, the first carrier, comprising the polyanhydride, and the second carrier, comprising the secondary antioxidant, are blended in solid state, i.e. they are dry blended or mixed. They may be mixed at ambient temperature (e.g. about 20°C). By using a first and second a carrier, the weight ratio of polyanhydride to the secondary antioxidant may easily be adjusted. Further, the risk of polyanhydride and the secondary antioxidant interacting during manufacture of the masterbatch may be avoided. In order to facilitate the use of the masterbatch, the dry mix of the first carrier with the polyanhydride and the second with the secondary antioxidant may be compacted, e.g. powder compacted, or cold extruded, whereby the masterbatch may be provided as pellets.

Eventually, the masterbatch is to be melt mixed with a polyester, such as PET. This mixing may be performed in the production of articles. However, while less preferred, as repeated processing is required, a polyester, such as PET, may still be compounded with the masterbatch. Such a compound may then on site, or at another site be processed into an article. If to the premix the polyester with the masterbatch, it is preferred to mix them in solid state, i.e. dry mixing. Subsequently, the premix may be melt mixed and processed. Thus, an embodiment relates to a thermoplastic polyester, such as PET, mixed with the present masterbatch.

According to an aspect there is provided an article comprising a polyethylene terephthalate (PET), which polyester has been melt mixed with the present masterbatch in producing the article. The article may be a foam, a bottle, such as a blow molded bottle, or a tray, such as a foam tray for use in the food industry. Further, the article may be a film, a sheet, or a fiber. A typical application of foams of upgraded PET is as a core material in wind turbine rotors. A film or a sheet of an upgraded PET, could subsequently be used in thermoform packaging, e.g. clamshells, trays, cups and similar.

According to a further aspect, there is provided the use of a polyanhydride, being a tetracarboxylic dianhydride, and a secondary antioxidant, being a phosphorous based stabilizer, to improve the melt rheology of a polyethylene terephthalate. The use may be to increase the melt viscosity, the melt strength, and/or the melt elasticity of the thermoplastic polyester, such as to at least increase the melt strength. As stated herein above, the polyanhydride and the secondary antioxidant are used in a weight ratio of 5:1 to 1:5, such as 5:1 to 1:1, 1:1 to 1:5, 3:1 to 1:3, 3:1 to 1:1, 1:1 to 1:3, or 2:1 to 1:2. The polyester to be improved may be polyethylene terephthalate. Further, various aspects disclosed herein above in relation to the masterbatch and its constituents, are equally applicable *mutatis mutandis* to such use. Thus, the secondary antioxidant may for example be tetrakis-(2,4-ditert-butyphenyl)-4,4'-biphenylylen-diphosphonite. Further, the polyanhydride may for example be pyromellitic dianhydride (PMDA).

In such use, the polyanhydride is melt mixed with the thermoplastic polyester in an amount of 0.05 to 0.5 wt%, such as 0.1 to 0.3 wt%, relative the thermoplastic polyester and/or the secondary antioxidant in an amount of 0.05 to 0.5 wt%, such as 0.1 to 0.3 wt%, relative the thermoplastic polyester.

The thermoplastic polyester is polyethylene terephthalate (PET) or a co-polymer of PET and a further polymer, such as a block co-polymer, a random co-polymer or blends thereof.

According to a further aspect, there is provided a method of improving the melt rheology of a thermoplastic polyester, such as increasing the melt viscosity, the melt strength, and/or the melt elasticity of the thermoplastic polyester, e.g. at least increasing the melt strength of the thermoplastic polyester. The method comprises the step of melt mixing a polyanhydride, being a tetracarboxylic dianhydride, and a secondary antioxidant, being a phosphorous based stabilizer, with the thermoplastic polyester. The melt mixing may be performed in a screw extruder (e.g. a single, twin, or double screw extruder). The weight ratio of the polyanhydride and the secondary antioxidant is 5:1 to 1:5, such as 5:1 to 1:1, 1:1 to 1:5, 3:1 to 1:3, 3:1 to 1:1, 1:1 to 1:3, or 2:1 to 1:2.

Further, the polyanhydride is mixed with the thermoplastic polyester in an amount of 0.05 to 0.5 wt%, such as 0.1 to 0.3 wt%, relative the thermoplastic polyester and/or the secondary antioxidant in an amount of 0.05 to 0.5 wt%, such as 0.1 to 0.3 wt%, relative the polyester. Further, various aspects disclosed herein above in relation to the masterbatch and its constituents, are equally applicable *mutatis mutandis* to such a method. Thus, the secondary antioxidant may for example be tetrakis-(2,4-ditert-butyphenyl)-4,4'-biphenylylen-diphosphonite. Further, the polyanhydride may for example be pyromellitic dianhydride (PMDA).

The thermoplastic polyester is polyethylene terephthalate (PET) or a co-polymer of PET a further polymer, such as a block co-polymer, a random co-polymer or blends thereof.

Once melt mixed, the resulting melt may be processed, extruded and e.g. foamed or blow molded. The melt may thus be processed into an article, such as a foam, or a blow molded article, e.g. a bottle. As already described, such a foam, may for example be used for trays, e.g. food trays, or as core materiel in light weight construction material, e.g. as core material in wind turbine rotors. Further, the melt may be processed into a film, a sheet, or a fiber. Upgrading of PET using PMDA and subsequent processing into articles has been described in the art, as can be seen in *inter alia* EP 2 163 577 B1. Further, upgrading by means of reactive extrusion is disclosed in EP 3 246 349.

In melt mixing the polyanhydride, the secondary antioxidant and the polyester, the temperature should exceed the melting point of the thermoplastic polyester, i.e. the components should be melt mixed. However, in order to limit the inherent degradation, the temperature should not be too high. The temperature is thus typically lower than 350°C. According to an embodiment, the temperature during the melt mixing is from 200°C to 320°C, such as from 210°C to 280°C. For PET, the temperature during the melt mixing does preferably not exceed 300°C.

According to an embodiment, the process further comprises the step of foaming the obtained thermoplastic polyester having improved melt strength. According to such an embodiment, the process may further comprise adding a blowing agent, such as carbon dioxide, nitrogen, a ketone, methyl formate, a hydrofluorocarbon, a hydrocarbon, e.g. n-hexane, iso- or n-pentane, cyclopentane or n-heptane, or a gas mixture thereof, an expanding agent, and/or a foaming agent to the thermoplastic polyester. Further, other additives may be added to the thermoplastic polymer. Thus, also a nucleating agent, such as talc, kaolin, silica gel, diatomaceous earth, wollastonite, zeolite, carbonate salts, e.g. sodium carbonate, benzoate salts, e.g. sodium benzoate, bicyclo [2.2.1] heptane dicarboxylate salts, e.g. lithium and sodium salts, 12H-dibenzo[d,g][1,3,2]dioxaphosphocin,2,3,8,10-tetrakis(1,1-dimethylethyl)-6-hydroxy,-6-oxide salts, e.g. a lithium salt, or TiO₂, a flame retardant, such as a halogenated, charforming (like phosphorus-containing) or water-releasing compound, a plasticizer, a lubricant, such as an ester of a fatty acid, an impact modifier, insulation modifier, a pigment, a filler, an antioxidant, a UV-stabilizer and/or a color improver may be added to the thermoplastic polyester and melt mixed therewith.

As already described, the thermoplastic polyester with improved melt strength may be foamed. According to an alternative embodiment, the obtained thermoplastic polyester with improved melt strength is molded, such as injection molded, blow molded, or injection molded followed by stretch-blow molding, in an additional step.

According to a further aspect of the invention there is thus provided an article obtained by extrusion, injection molding, blow molding, foaming, and/or stretch-blow molding a thermoplastic polyester melt mixed with a polyanhydride, being a tetracarboxylic dianhydride, and a secondary antioxidant, being a phosphorous based stabilizer. A specific embodiment relates to a PET-foam.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

### EXPERIMENTAL

The following examples are mere examples and should by no means be interpreted to limit the scope of the invention. Rather, the invention is limited only by the accompanying claims.

### Abbreviations

- **PBO**: phenylene-bis-oxazoline
- **PEPQ**: tetrakis-(2,4-ditert-butyphenyl)-4,4'-biphenylylen-diphosphonite
- **PET**: polyethylene terephthalate
- **PMDA**: pyromellitic dianhydride
- **SHP**: sterically hindered phenol
- **PETA**: Phenylethynyltrimelliticanhydride

### Drawings

**Fig. 1** provides a comparison of SHP and PEPQ in melt extruding PET in terms of:
   a) the complex viscosity for a frequency sweep at 270°C (Fig. 1.1, Fig. 1.3, Fig. 1.5, and Fig. 1.7); and
   b) the torque in a micro compounder over time (Fig. 1.2, Fig. 1.4, and Fig. 1.6).
**Fig. 2** provides a comparison of PEPQ with other secondary antioxidants in melt extruding PET in terms of:
   a) the complex viscosity for a frequency sweep at 270°C (Fig. 2.1 and Fig. 2.3); and
   b) the torque in a micro compounder over time (Fig. 2.2 and Fig. 2.4).
**Fig. 3** provides a comparison of PEPQ for increasing dosages relative PMDA in melt extruding PET in terms of:
   a) the complex viscosity for a frequency sweep at 270°C (Fig. 3.1); and
   b) the torque in a micro compounder over time (Fig. 3.2).
**Fig. 4** provides a comparison of PEPQ and another enhancing additive, i.e. PETA and PBO, in melt extruding PET in terms of:
   a) the complex viscosity for a frequency sweep at 270°C (Fig. 4.1); and
   b) the torque in a micro compounder over time (Fig. 4.2).
**Fig. 5** provides a comparison of PEPQ in lower dosages in melt extruding PET in terms of:
   a) the complex viscosity for a frequency sweep at 270°C (Fig. 5.1); and
   b) the torque in a micro compounder over time (Fig. 5.2).

### Material and methods

In the examples, NeoPET 82 (IV=0.82 ± 0.02 dl/g; NEOGROUP) were modified by reactive extrusion in micro-compounder (ThermoFisher Scientific Haake MiniLab II) in the presence of additives. The additives were:
- Irganox 1330 (3,3',3',5,5',5'-hexa-tert-butyl-a,a',a'-(mesitylene-2,4,6-triyl)tri-p-cresol) from BASF
- Irganox 1425 (also known as Irgamod 195), (calcium-bis (((3,5-bis(1,1-dimethylethyl)-4-hydroxyphenyl)methyl)-ethylphosphonate)) from BASF
- Irgafos 168 (tris(2,4-di-tert.-butylphenyl)phosphite) from BASF
- PEPQ (tetrakis-(2,4-ditert-butyphenyl)-4,4'-biphenylylen-diphosphonite) from Songwon; and
- PMDA (pyromellitic dianhydride) from Hope Chemicals

The compounding of PET (vacuum dried for 12 hours at 120°C) and the additives were performed in a Haake MiniLab II (a micro-compounder with closed loop). The compounding was performed at 270°C and 60 rpm for 20 minutes. The torque was measured as an indicative measure of cross-linking, chain-extension and branching, as well as melt stability.

After 20 minutes micro-compounding, samples were taken directly for rheological characterization with an TA Instruments Ares G2 rotational rheometer with 25 mm parallel plate (gap 1 mm) for a frequency sweep at 270°C and strain of 1%.

In total 18 runs were performed in this manner. In **Table 1** below, an overview is provided with the additives in each run provided. All amounts are given relative PET in weight%.

**Table 1 - Overview of examples**

| **Exampl e** | ADDIVTIVE | | | | | | |
|---|---|---|---|---|---|---|---|
| | **PMDA** | **Irganox 1330** | **PEPQ** | **Irgafos 168** | **Irganox 1425** | **PETA** | **PBO** |
| **Ref 1** | 0.3 | | | | | | |
| **Ref 2** | 0.2 | | | | | | |
| **CE 1** | 0.3 | 0.1 | | | | | |
| **CE 3** | 0.3 | | | | 0.1 | | |
| **CE 4** | 0.3 | 0.3 | | | | | |
| **CE 6** | 0.3 | | | | 0.3 | | |
| **CE 7** | 0.2 | | | | | | 0.1 |
| **CE 8** | 0.2 | | | | | 0.1 | |
| **IE 1** | 0.3 | | 0.1 | | | | |
| **IE 2** | 0.3 | | 0.3 | | | | |
| **IE 3** | 0.3 | | 0.5 | | | | |
| **IE 4** | 0.3 | 0.1 | 0.3 | | | | |
| **IE 5** | 0.2 | | 0.1 | | | 0.1 | |
| **IE 6** | 0.2 | | 0.1 | | | | 0.1 |
| **IE 7** | 0.2 | | 0.1 | | | | |
| **IE 8** | 0.2 | | 0.2 | | | | |
| **IE 9** | 0.3 | | | 0.1 | | | |
| **IE 10** | 0.3 | | | 0.3 | | | |

| | | | | | | | |
|---|---|---|---|---|---|---|---|
| IE = Inventive example CE = Comparative example Ref = Reference | | | | | | | |

### Results

In order to allow for a comparison and various conclusions to be drawn, examples were grouped together in different combinations.

### Comparison 1 - Performance of secondary vs primary antioxidants, e.g. PEPQ vs SHP.

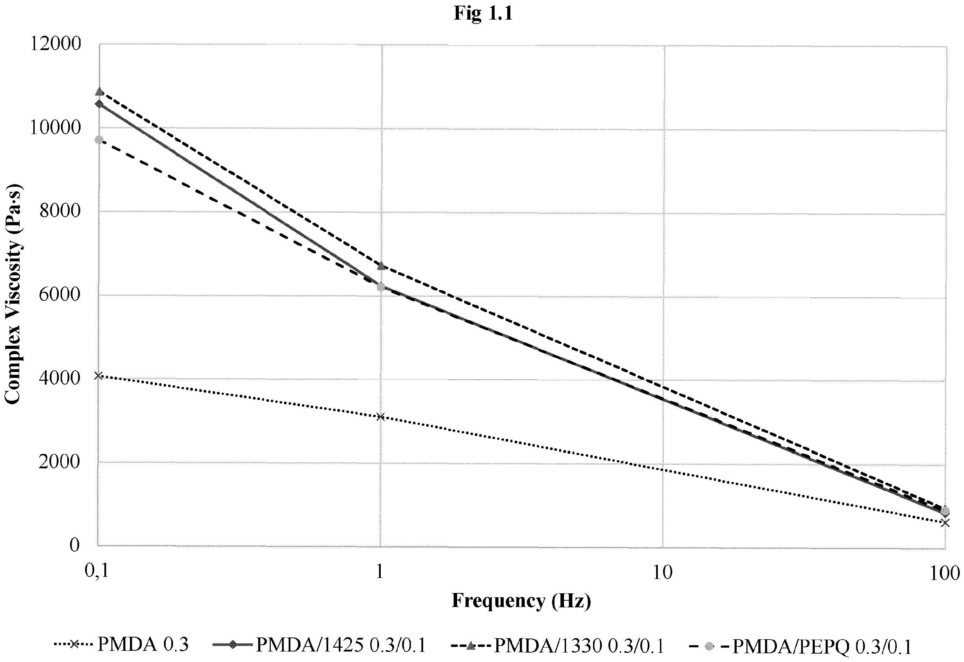

In the first comparison, PEPQ and SHPs (Irganox 1330 and Irganox 1425, respectively) were compared in **Table 2** and **Fig. 1.1** - **1.7.** In the table, the maximal torque as well as the final torque after 20 min is reported. Further, the complex viscosity at 0.1, 1, and 100 Hz is given.

**Table 2**

| **Example** | **Torque [N·m]** | | **η*[Pa·s]** | | |
|---|---|---|---|---|---|
| | Max | End (20 min) | (0.1 Hz) | (1 Hz) | (100 Hz) |
| **Ref 1** | 1.25 | 0.58 | 4063 | 3101 | 623 |
| **CE 1** | 1.86 | 0.84 | 10871 | 6721 | 950 |
| **CE 3** | 1.84 | 0.89 | 10569 | 6233 | 841 |
| **CE 4** | 1.95 | 0.91 | 9884 | 6282 | 858 |
| **CE 6** | 1.41 | 0.87 | 9980 | 6493 | 948 |
| **IE 1** | 2.29 | 0.92 | 9711 | 6207 | 902 |
| **IE 2** | 2.05 | 0.98 | 15065 | 8155 | 1015 |
| **IE 4** | 2.17 | 1.17 | 18395 | 8905 | 970 |

As it can be seen, the secondary antioxidant PEPQ performs just as well as the primary antioxidants Irganox 1330 and Irganox 1425, respectively, at the same dosage in a 1:3 ratio relative PMDA (CE1, CE 3 vs. IE1). This finding is contrary to reports in the art (cf. EP 2 163 577 B1) stating the while secondary antioxidants could be used to improve the performance of the primary antioxidant, the dosage should be low as they otherwise may compromise with the melt strength enhancing reaction of polyester with the primary antioxidant. The finding that higher dosages of secondary antioxidant together with PMDA improves the melt strength as effectively as primary antioxidant is very surprising.

Furthermore, in higher ratios (e.g. 1:1 vs. PMDA), the secondary antioxidant even outperforms the primary antioxidant and provides a greater increase in viscosity (IE2 vs. CE4, CE6).

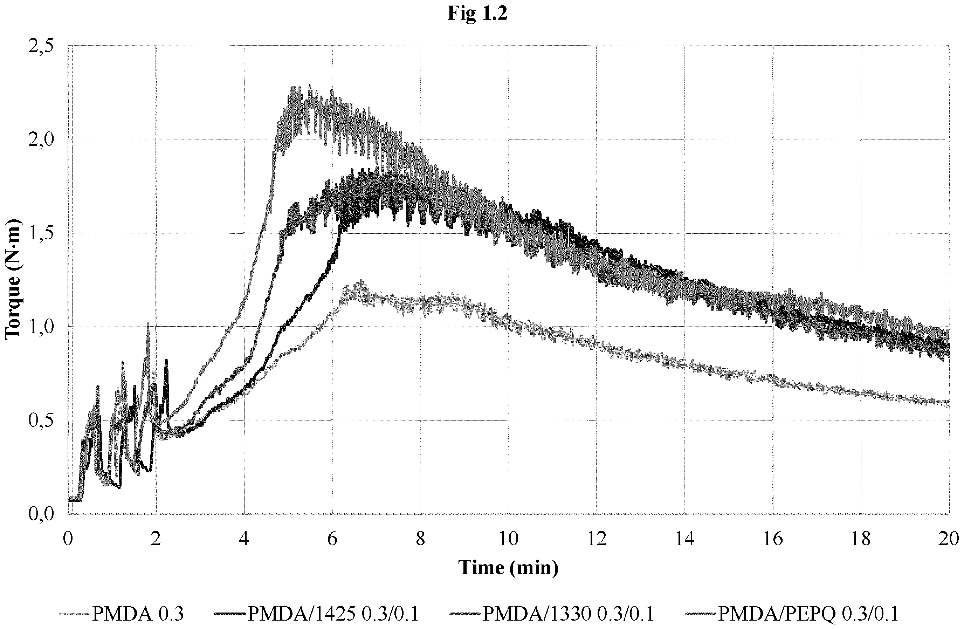

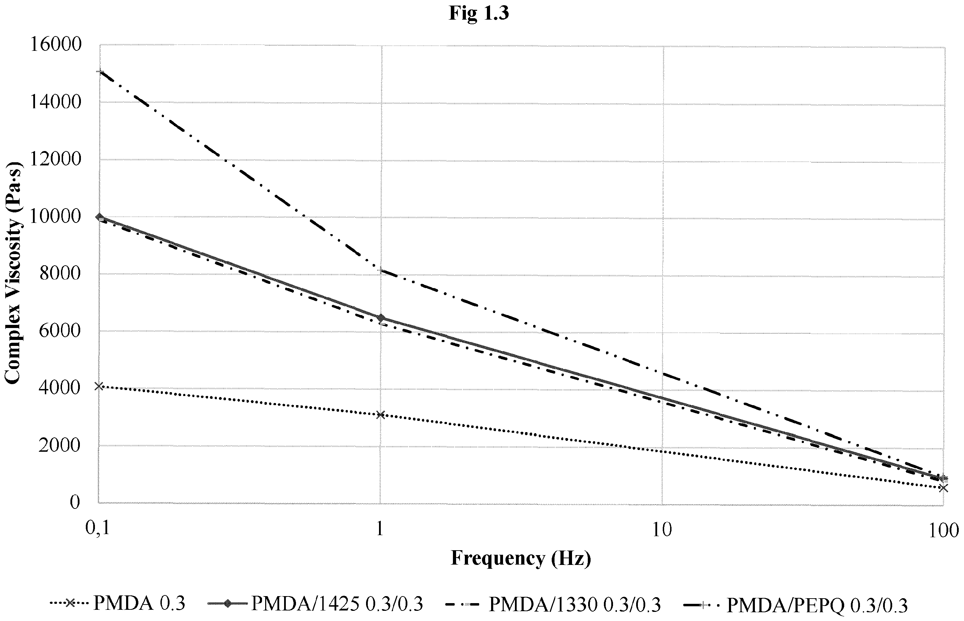

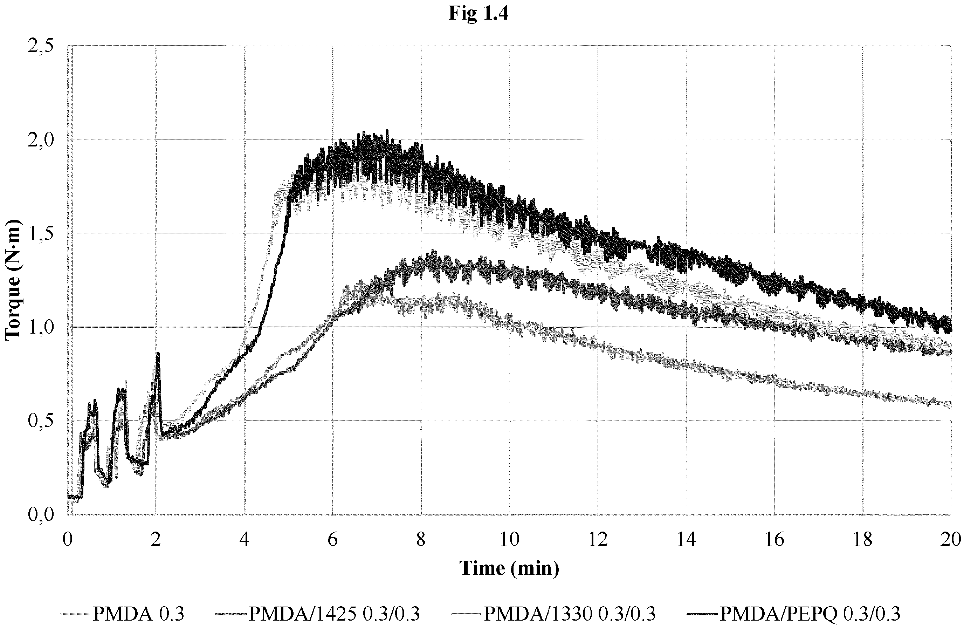

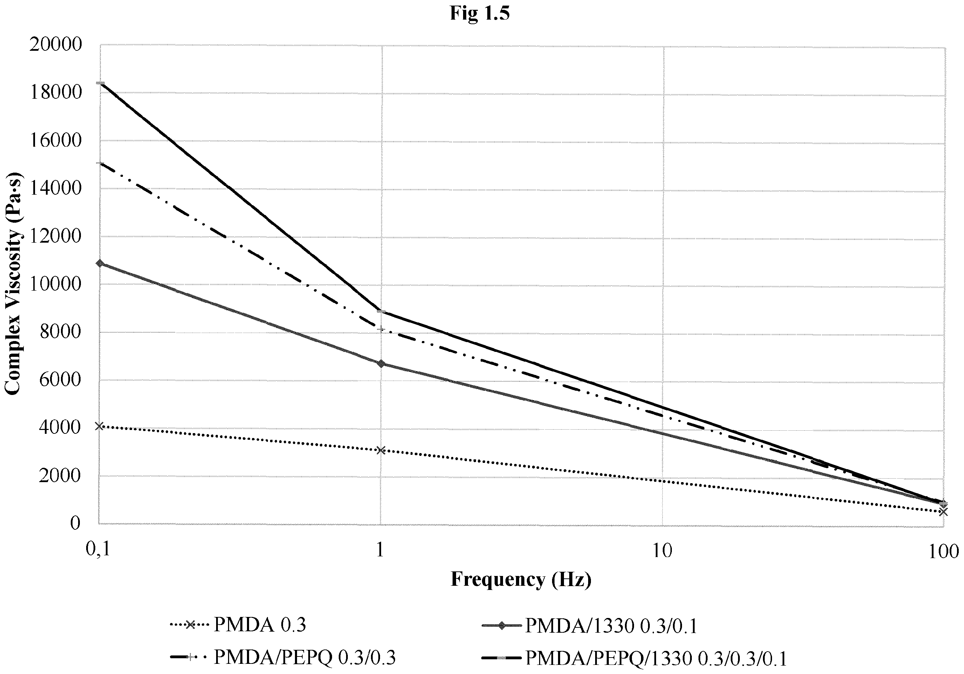

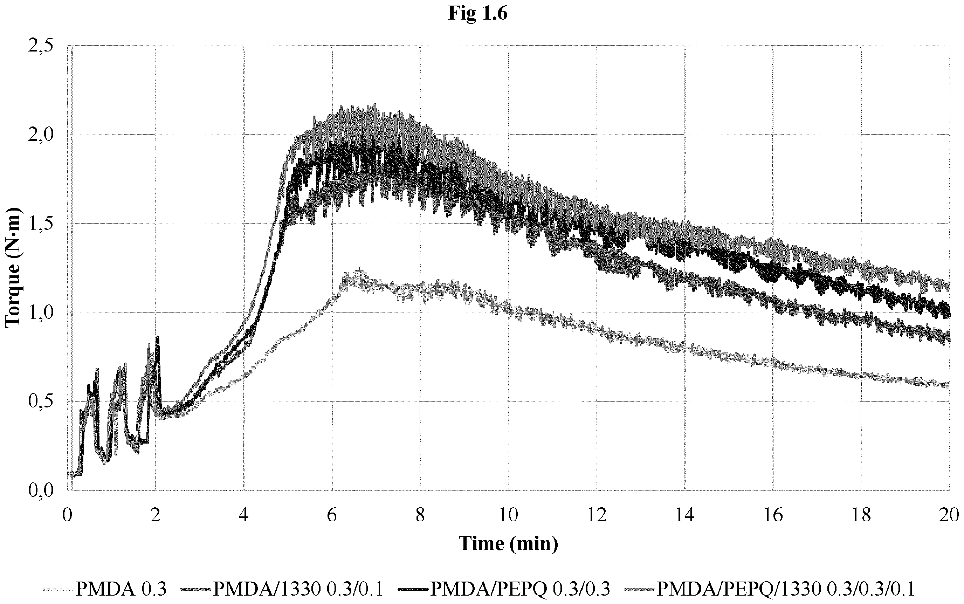

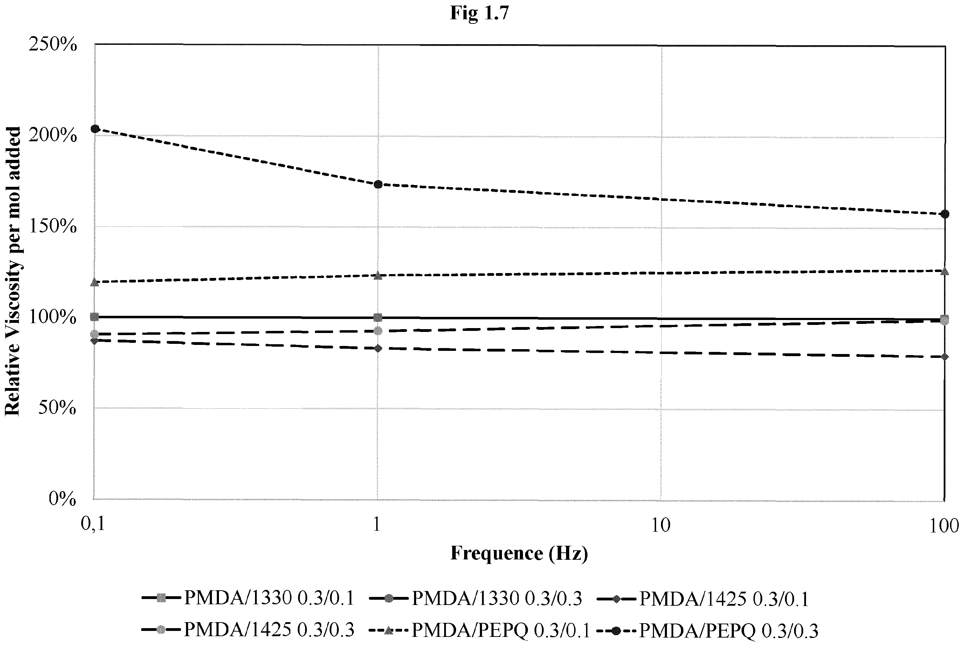

It is clear that the primary antioxidant and the secondary antioxidant PEPQ assert their effect by different mechanisms as the performance of the secondary antioxidant PEPQ is further enhanced by the addition of a primary antioxidant such as Irganox 1330 as can be seen from **Fig. 1****.****5** and **Fig. 1.6,** see IE4. Also, PEPQ has the highest effect per molecule compared to the primary antioxidants Irganox 1330 and 1425, as can be seen from **Fig. 1.7** (the viscosity of Irganox 1330, CE1 & 4, are set as the reference viscosities).

It could thus be concluded that secondary antioxidants represent a useful additive to be combined with a polyanhydride, e.g. PMDA, for improving the melt characteristics of polyesters. The melt characteristics of polyesters are known to be indicative also for the mechanical properties at room temperature, as they are all dependent on the molecular weight of the polymer.

### Comparison 2 - Performance of different secondary antioxidants

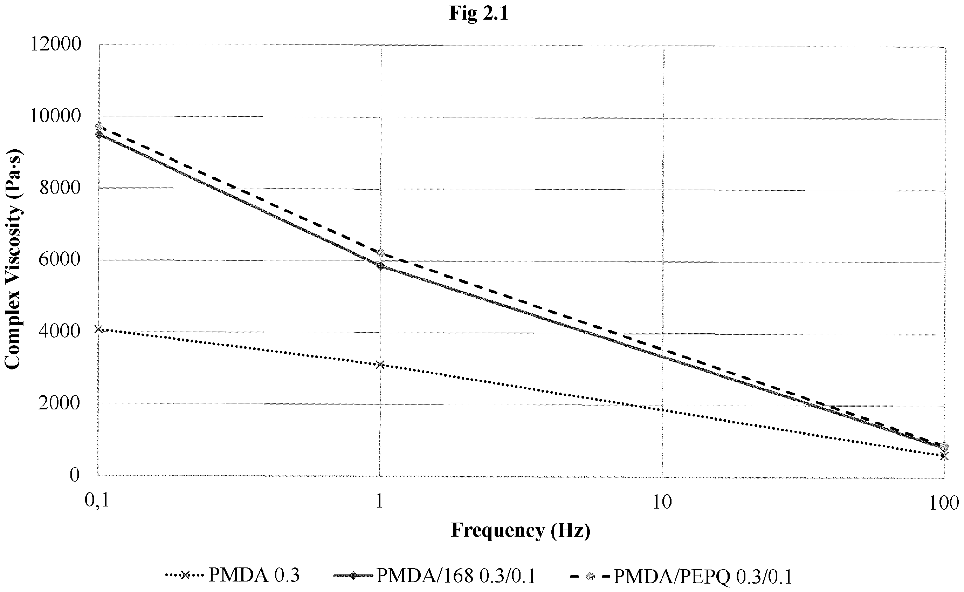

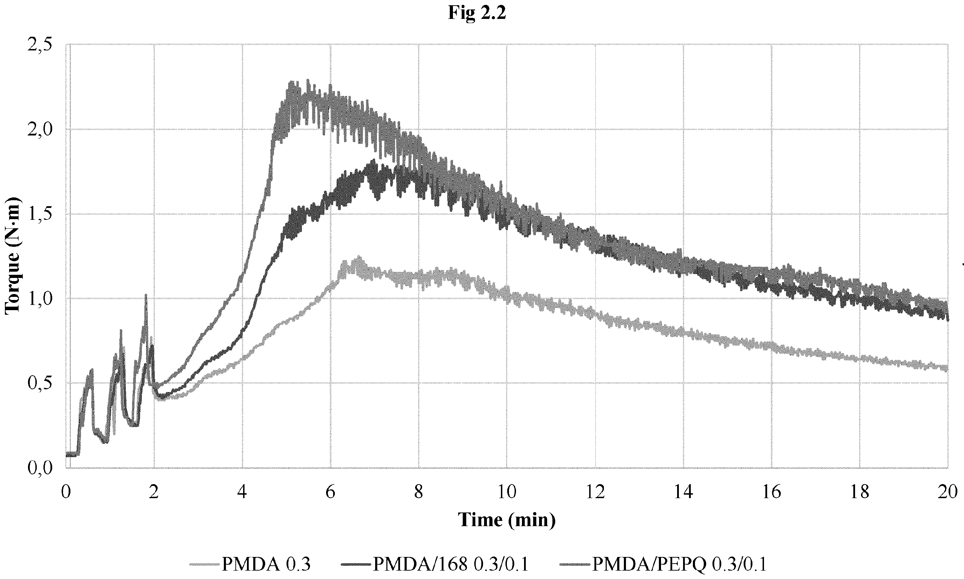

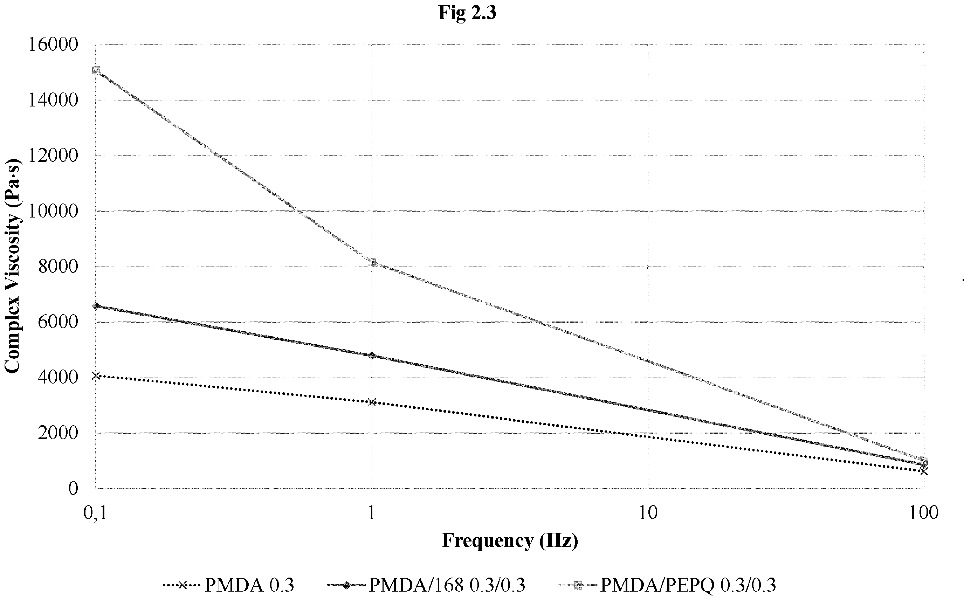

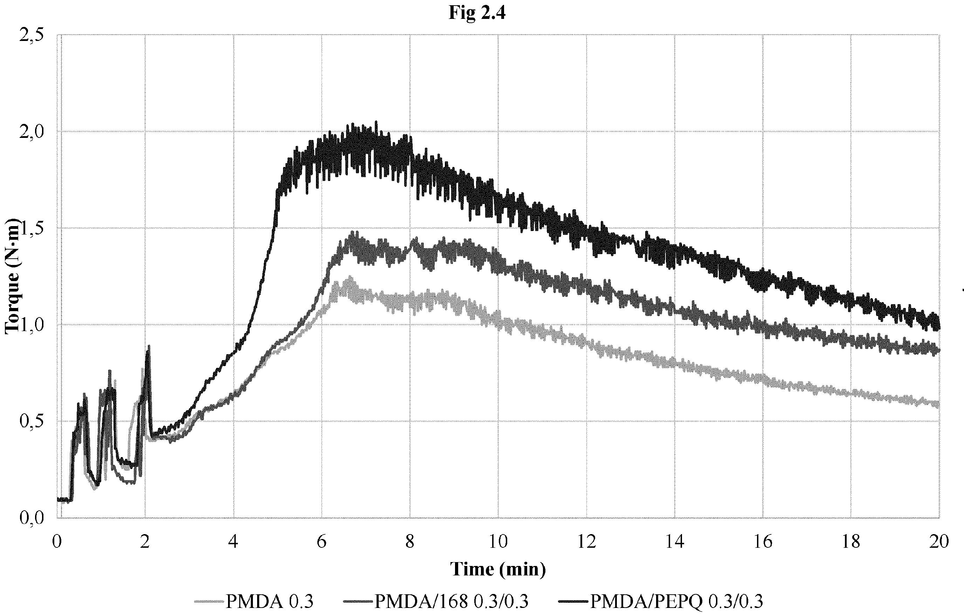

In the second comparison, various secondary antioxidants were compared in **Table 3.1** and **Fig. 2.1 - 2.4.** In the table the maximal torque as well as the final torque is reported. Further, the complex viscosity at 0.1, 1, and 100 Hz is given.

**Table 3.1**

| **Example** | **Torque [N·m]** | | **η*[Pa·s]** | | |
|---|---|---|---|---|---|
| | Max | End (20 min) | (0.1 Hz) | (1 Hz) | (100 Hz) |
| **Ref 1** | 1.25 | 0.58 | 4063 | 3101 | 623 |
| **IE 1** | 2.29 | 0.92 | 6207 | 9711 | 902 |
| **IE 2** | 2.05 | 0.98 | 15065 | 8155 | 1015 |
| **IE 9** | 1.84 | 0.89 | 10569 | 6233 | 841 |
| **IE 10** | 1.41 | 0.87 | 9980 | 6493 | 948 |

As can be seen, also other secondary antioxidants act synergistically with PMDA. However, phosphites are seemingly not effective as phosphonites. Phosphonites, e.g. PEPQ, thus represents a preferred secondary antioxidant in the context of the present invention.

### Comparison 3 - Influence of Ratio

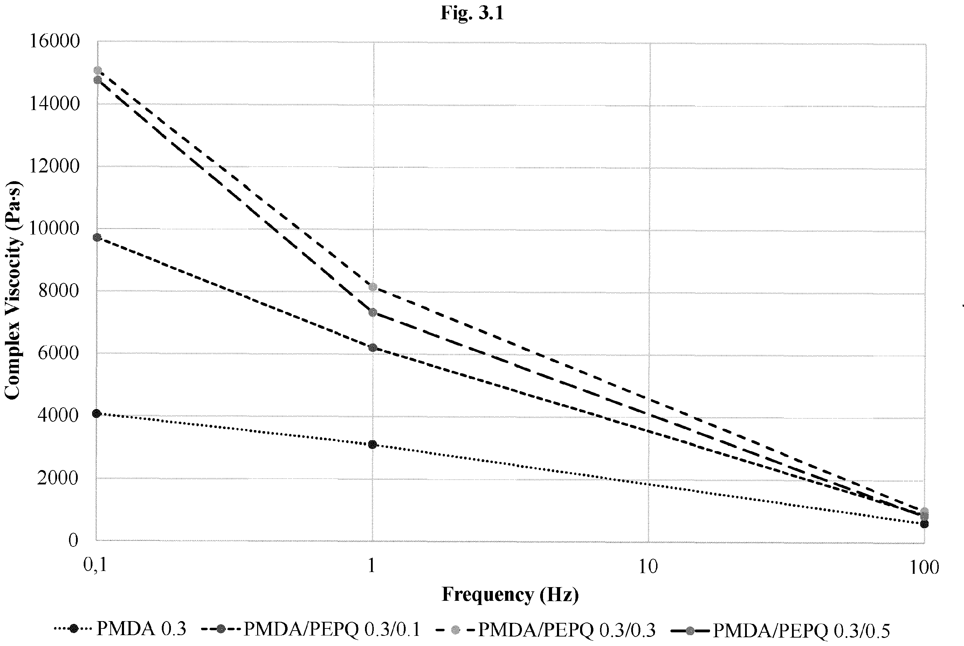

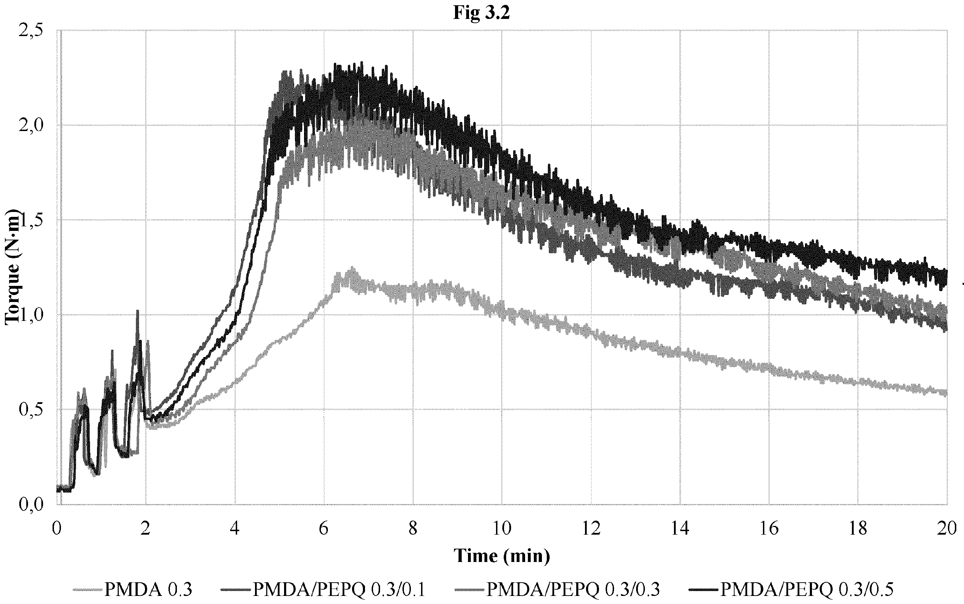

In the third comparison, various ratios of PMDA and PEPQ are compared in **Table 4** and **Fig. 3.1** - **3.2.** In the table the maximal torque as well as the final torque is reported. Further, the complex viscosity at 0.1, 1, and 100 Hz is given.

**Table 4**

| **Example** | **Ratio (PMDA:PEPQ)** | **Torque [N·m]** | | **η*[Pa·s]** | | |
|---|---|---|---|---|---|---|
| | | Max | End (20 min) | (0.1 Hz) | (1 Hz) | (100 Hz) |
| **Ref 1** | 3:0 | 1.25 | 0.58 | 4063 | 3101 | 623 |
| **IE 1** | 3:1 | 2.29 | 0.92 | 9711 | 6207 | 902 |
| **IE 2** | 1:1 | 2.05 | 0.98 | 15065 | 8155 | 1015 |
| **IE 3** | 3:5 | 2.33 | 1.18 | 14756 | 7338 | 856 |

Various relative dosing of PEPQ will provide different effects. It seems that at higher ratios, a higher degree of branching is provided (cf. increased shear thinning at higher ratios in **Fig. 3b**)**.** Whereas increasing the ratio from 3:1 to 1:1 provides a general increase (IE1 vs. IE2), the change in further increasing the ratio from 3:3 to 3:5 (IE2 vs. IE3) is far less dramatic. It thus seems that a plateau is reached somewhere between 3:3 and 3:5.

At least for some applications, a ratio of 1:1 seems to be preferred.

### Comparison 4 - Influence of other enhancing additives, e.g. PBO and PETA

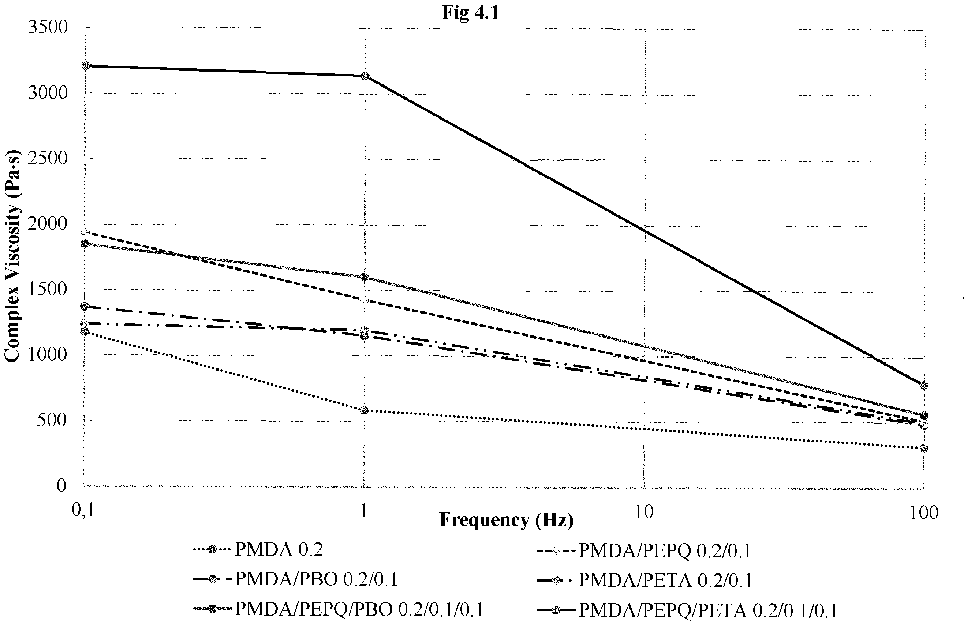

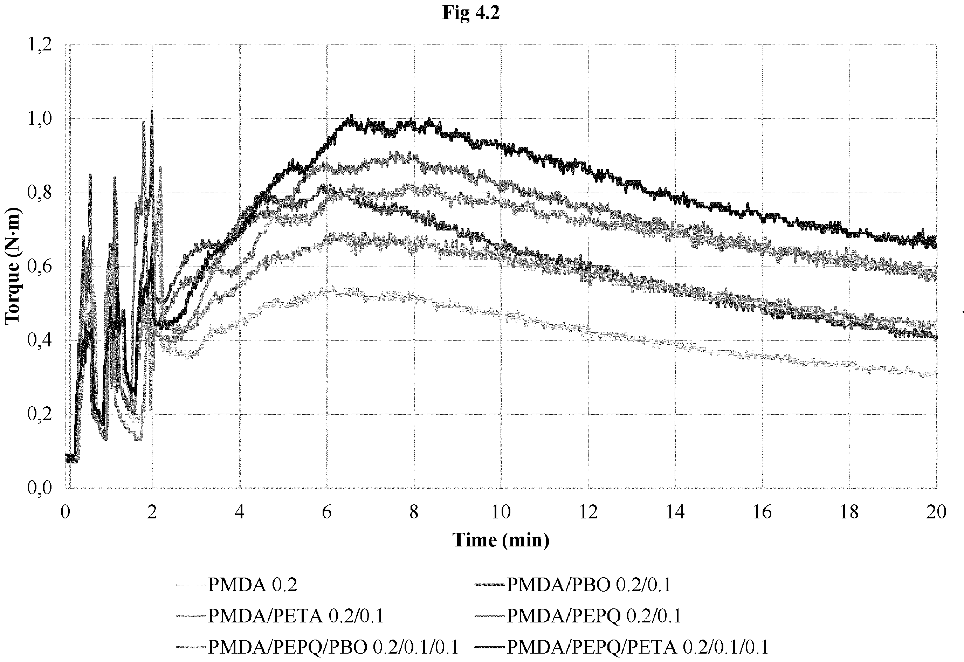

In the fourth comparison, addition of further enhancing additives, i.e. PBO and PETA, is studied in Table 5 and Fig. 4.1 - 4.2. In the table the maximal torque as well as the final torque is reported. Further, the complex viscosity at 0.1, 1, and 100 Hz is given.

**Table 5**

| **Example** | **Torque [N·m]** | | **η*[Pa·s]** | | |
|---|---|---|---|---|---|
| | Max | End (20 min) | (0.1 Hz) | (1Hz) | (100 Hz) |
| **Ref 2** | 0.55 | 0.31 | 1175 | 583 | 312 |
| **CE 7** | 0.82 | 0.41 | 1370 | 1154 | 483 |
| **CE 8** | 0.69 | 0.44 | 1239 | 1194 | 494 |
| **IE 5** | 1.01 | 0.66 | 3205 | 3135 | 789 |
| **IE 6** | 0.82 | 0.60 | 1846 | 1600 | 560 |
| **IE 7** | 0.91 | 0.59 | 1938 | 1427 | 509 |

Similar to when combined with a sterically hindered phenol, PBO improved the performance of PMDA in the presence of a secondary antioxidant. Given that it has been concluded that sterically hindered phenol interact with PMDA via another mechanism than secondary antioxidants, this was not expected. PBO has been reported to decrease the melt strength of PMDA in the absence of a sterically hindered phenol (cf. EP 2 163 577 B1). Further, PETA also acted synergistically with PMDA. When combining PEPQ and PBO without any PMDA no, or little effect was seen (data not presented).

However, the effect of combining PMDA with PEPQ and PETA is promising, as when combined melt viscosity is greatly enhanced compared to the combination with PBO. Thus, neither the synergy of PMDA, PBO or PETA is affected by the addition of PEPQ rather they may be further enhanced.

### Comparison 5 - Performance at lower dosages

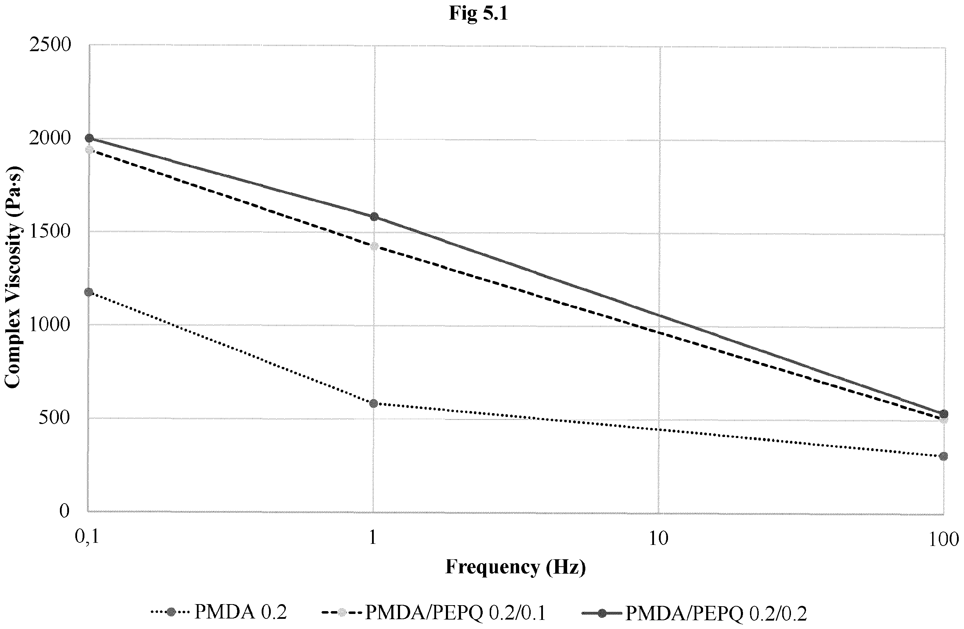

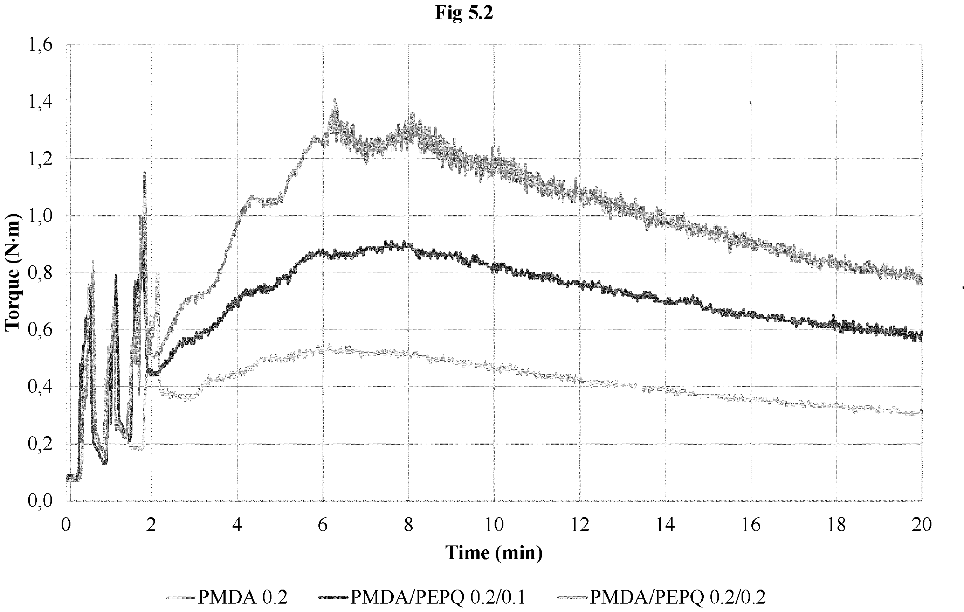

In the fifth comparison, performance at lower dosages of PEPQ are compared in **Table 6** and **Fig. 5.1 - 5.2.** In the table the maximal torque as well as the final torque is reported. Further, the complex viscosity at 0.1, 1, and 100 Hz is given.

**Table 6**

| **Example** | **Torque [N·m]** | | **η*[Pa·s]** | | |
|---|---|---|---|---|---|
| | Max | End (20 min) | (0.1 Hz) | (1Hz) | (100 Hz) |
| **Ref 2** | 0.55 | 0.31 | 1175 | 583 | 312 |
| **IE 7** | 0.91 | 0.59 | 1938 | 1427 | 509 |
| **IE 8** | 1.41 | 0.76 | 2000 | 1584 | 537 |

By adding PEPQ, the dosage of PMDA could be lowered still maintaining the synergistic effect of PEPQ. It should be noted that at lower dosage, corresponding dependence of PMDA:PEPQ ratio is seen.

## Claims

1. A masterbatch for increasing the melt strength of polyethylene terephthalate, wherein the masterbatch comprises a polyanhydride, a secondary antioxidant, and at least one thermoplastic carrier, the weight ratio of the polyanhydride and the secondary antioxidant being 5:1 to 1:5, wherein the secondary antioxidant is a phosphorous based stabilizer, wherein the polyanhydride is a tetracarboxylic dianhydride, and wherein the masterbatch comprises 0.05 to 20 wt.% of the polyanhydride and 0.05 to 15 wt.% of the secondary antioxidant.

2. The masterbatch according to claim 1, wherein the phosphorous based stabilizer is selected from the group consisting of a phosphonite, e.g. tetrakis-(2,4-ditert-butyphenyl)-4,4'-biphenylylen-diphosphonite or 2,2'-ethylidenebis(4,6-di-tert-butylphenyl)fluorophosphonite, a phosphite, e.g. (tris(2,4-di-tert-butylphenyl)phosphite), or bis-(2,4-di-tert.-butylphenol)pentaerythritol diphosphite, and a phosphonate; and/or
wherein the tetracarboxylic dianhydride is pyromellitic dianhydride or 3,3',4,4'-Benzophenonetetracarboxylic dianhydride; preferably the polyanhydride is pyromellitic dianhydride.

3. The masterbatch according to claim 2, wherein the phosphorous based stabilizer is a phosphonite, such as tetrakis-(2,4-ditert-butyphenyl)-4,4'-biphenylylen-diphosphonite.

4. The masterbatch according to any one of claims 1 to 3, wherein the carrier is selected from the group consisting of polyolefins, e.g. polyethylene and/or polypropylene, ethylene-acrylate copolymers, thermoplastic waxes, polyolefin waxes, polyolefin elastomers, polyolefin plastomers, maleic anhydride grafted polyolefin, styrenics, polyolefin ionomers, such as ethylene ionomers, polyesters, such as polyethylene terephthalate and/or polybutylene terephthalate, co-polymers of polyesters, such as co-polyesters, thermoplastic elastomers, such as polyether esters, or polyether amides, or a mixture of two or more of such polymers.

5. The masterbatch according to any one of claims 1 to 4, wherein the masterbatch further comprises:
- a sterically hindered phenolic antioxidant, e.g. 4-((3,5-bis((4-hydroxy-3,5-ditert-butyl-phenyl)methyl)-2,4,6-trimethylphenyl)methyl)-2,6-ditert-butyl-phenol; and/or
- a polyoxazoline, e.g. 1,3-phenylene-bis-oxazoline, or 1,4-phenylene-bis-oxazoline; and/or
- 5-(3-phenylprop-2-ynoyl)isobenzofuran-1,3-dione.

6. An article comprising a polyethylene terephthalate, having been melt mixed with the masterbatch according to any one of claims 1 to 5; preferably the article is a foam, optionally being part of a wind turbine rotor, a bottle, such as a blow molded bottle, a tray, such as a foam tray for use in the food industry, a film, a sheet, or a fiber.

7. The article according to claim 6, wherein the article is a foam, optionally being part of a wind turbine rotor.

8. A method of increasing the melt strength of a polyethylene terephthalate, said method comprising the step of melt mixing a polyanhydride and a secondary antioxidant with the polyethylene terephthalate, the weight ratio of the polyanhydride and the secondary antioxidant being 5:1 to 1:5; wherein the secondary antioxidant is a phosphorous based stabilizer, and wherein the polyanhydride is a tetracarboxylic dianhydride, wherein the polyanhydride is mixed with the polyethylene terephthalate in an amount of 0.05 to 0.5 wt% relative the polyester, and/or wherein the secondary antioxidant is mixed with the polyethylene terephthalate in an amount of 0.05 to 0.5 wt% relative the thermoplastic polyester.

9. The method according claim 8, wherein the melt mixing is performed in a screw extruder

10. The method according claim 8 or 9, wherein the polyanhydride is mixed with the polyethylene terephthalate in an amount of 0.1 to 0.3 wt% relative the polyester and/or the secondary antioxidant is mixed with the polyester in an amount of 0.1 to 0.3 wt% relative the thermoplastic polyester.

11. The method according to any one of claim 8 to 10,
wherein the phosphorous based stabilizer is selected from the group consisting of a phosphonite, e.g. tetrakis-(2,4-ditert-butyphenyl)-4,4'-biphenylylen-diphosphonite, or 2,2'-ethylidenebis(4,6-di-tert-butylphenyl)fluorophosphonite, a phosphite, e.g. (tris(2,4-di-tert-butylphenyl)phosphite), or bis-(2,4-di-tert.-butylphenol)pentaerythritol diphosphite, or a phosphonate; preferably the secondary antioxidant is a phosphonite, such as tetrakis-(2,4-ditert-butyphenyl)-4,4'-biphenylylen-diphosphonite; and/or
wherein the tetracarboxylic dianhydride is pyromellitic dianhydride or 3,3',4,4'-Benzophenonetetracarboxylic dianhydride; preferably the polyanhydride is pyromellitic dianhydride.

12. The method according to any one of claims 8 to 11, wherein the polyanhydride and the secondary antioxidant to be mixed with the polyethylene terephthalate are provided as a masterbatch according to any one of claims 1 to 5.

## Patentansprüche

1. Ein Masterbatch zum Steigern der Schmelzfestigkeit eines Polyethylenterephthalats, wobei der Masterbatch ein Polyanhydrid, ein sekundäres Antioxidans und wenigstens einen thermoplastischen Träger enthält, wobei das Gewichtsverhältnis des Polyanhydrids und des sekundären Antioxidans 5:1 bis 1:5 ist, wobei das sekundäre Antioxidans ein auf Phosphor basierender Stabilisator ist, wobei das Polyanhydrid ein Tetracarbonsäuredianhydrid ist und wobei der Masterbatch 0,05 bis 20 Gew.-% des Polyanhydrids und 0,05 bis 15 Gew.-% des sekundären Antioxidans enthält.

2. Der Masterbatch gemäß Anspruch 1, wobei der auf Phosphor basierende Stabilisator ausgewählt ist aus der Gruppe, bestehend aus Phosphonit, zum Beispiel Tetrakis-(2,4-ditert-butylphenyl)-4,4'-biphenylylen-diphospho-nit oder 2,2'-Ethylidenbis(4,6-di-tert-butylphenyl)fluorphosphonit, einem Phosphit, zum Beispiel (Tris(2,4-di-tert-butylphenyl)phosphit) oder Bis-(2,4-di-tert-butylphenol)pentaerythritoldiphosphit und einem Phosphonat; und/oder
wobei das Tetracarbonsäuredianhydrid Pyromellinsäuredianhydrid oder 3,3',4,4'-Benzophenontetracarbonsäuredianhydrid ist, wobei das Polyanhydrid bevorzugt Pyromellinsäuredianhydrid ist.

3. Der Masterbatch gemäß Anspruch 2, wobei der auf Phosphor basierende Stabilisator ein Phosphonit ist, wie Tetrakis-(2,4-di-tert-butylphenyl)-4,4'-biphenylylendiphosphonit.

4. Der Masterbatch gemäß einem der Ansprüche 1 bis 3, wobei der Träger ausgewählt ist aus der Gruppe, bestehend aus Polyolefinen, zum Beispiel Polyethylen und/oder Polypropylen, Ethylen-Acrylat-Copolymeren, thermoplastischen Wachsen, Polyolefinwachsen, Polyolefinelastomeren, Polyolefinplastomeren, mit Maleinsäure gepfropftem Polyolefin, Styrolen, Polyolefinionomeren, wie Ethylenionomeren, Polyestern, wie Polyethylenterephthalat und/oder Polybutylenterephthalat, Copolymeren von Polyestern, wie Copolyester, thermoplastischen Elastomeren, wie Polyetherestern, oder Polyetheramiden oder einer Mischung von zwei oder dieser Polymere.

5. Der Masterbatch gemäß einem der Ansprüche 1 bis 4, wobei der Masterbatch außerdem enthält:
- ein sterisch gehindertes phenolisches Antioxidans, zum Beispiel 4-((3,5-Bis((4-hydroxy-3,5-ditert-butyl-phenyl)methyl)-2,4,6-trimethylphenyl)methyl)-2,6-ditert-butyl-phenol und/oder
- ein Polyoxazolin, zum Beispiel 1,3-Phenylen-bis-oxazolin oder 1,4-Phenylen-bis-oxazolin; und/oder
- 5-(3-Phenylprop-2-ynolyl)isobenzofuran-1,3-dion.

6. Ein Gegenstand, der ein Polyethylenterephthalat enthält, das mit dem Masterbatch gemäß einem der Ansprüche 1 bis 5 in Schmelze gemischt wurde, wobei der Gegenstand bevorzugt ein Schaum, der gegebenenfalls Teil eines Windturbinenrotors ist, eine Flasche, wie eine blasgeformte Flasche, eine Schale, wie eine geschäumte Schale zur Verwendung in der Lebensmittelindustrie, eine Folie, ein Blatt oder eine Faser ist.

7. Der Gegenstand gemäß Anspruch 6, wobei der Gegenstand ein Schaum ist, der gegebenenfalls Teil eines Windturbinenrotors ist.

8. Ein Verfahren zum Steigern der Schmelzfestigkeit eines Polyethylenterephthalats, wobei dieses Verfahren den Schritt umfasst, ein Polyanhydrid und ein sekundäres Antioxidans mit dem Polyethylenterephthalat in Schmelze zu mischen, wobei das Gewichtsverhältnis des Polyanhydrids und des sekundären Antioxidans 5:1 bis 1:5 beträgt, wobei das sekundäre Antioxidans ein auf Phosphor basierender Stabilisator ist, und wobei das Polyanhydrid ein Tetracarbonsäuredianhydrid ist, wobei das Polyanhydrid mit dem Polyethylenterephthalat in einer Menge von 0,05 bis 0,5 Gew.-% in Bezug auf den Polyester gemischt wird, und/oder wobei das sekundäre Antioxidans mit dem Polyethylenterephthalat in einer Menge von 0,05 bis 0,5 Gew.-% in Bezug auf den thermoplastischen Polyester gemischt wird.

9. Das Verfahren gemäß Anspruch 8, wobei das Mischen in Schmelze in einem Schneckenextruder ausgeführt wird.

10. Das Verfahren gemäß Anspruch 8 oder 9, wobei das Polyanhydrid mit dem Polyethylenterephthalat in einer Menge von 0,1 bis 0,3 Gew.-% in Bezug auf den Polyester und/oder das sekundäre Antioxidans mit dem Polyester in einer Menge von 0,1 bis 0,3 Gew.-% in Bezug auf den thermoplastischen Polyester gemischt wird.

11. Das Verfahren gemäß einem der Ansprüche 8 bis 10,
wobei der auf Phosphor basierende Stabilisator ausgewählt ist aus der Gruppe, bestehend aus einem Phosphonit, zum Beispiel Tetrakis-(2,4-ditert-butylphenyl)-4,4'-biphenylylen-diphosphonit oder 2,2'-Ethyliden-bis(4,6-di-tert-butylphenyl)fluorphosphonit, einem Phosphit, zum Beispiel (Tris(2,4-di-tert-butylphenyl)phosphit) oder Bis-(2,4-di-tert-butylphenol)-pentaerythritoldiphosphit oder einem Phosphonat, wobei das sekundäre Antioxidans bevorzugt ein Phophonit ist, wie Tetrakis-(2,4-ditert-butylphenyl)-4,4'-biphenylylendiphosphonit und/oder
wobei das Tetracarbonsäuredianhydrid Pyromellindianhydrid oder 3,3',4,4'-Benzophenontetracarbonsäuredianhydrid ist, wobei das Polyanhydrid bevorzugt Pyromellinsäuredianhydrid ist.

12. Das Verfahren gemäß einem der Ansprüche 8 bis 11, wobei das Polyanhydrid und das sekundäre Antioxidans, das mit dem Polyethylenterephthalat gemischt werden soll, als ein Masterbatch gemäß einem der Ansprüche 1 bis 5 bereitgestellt wird.

## Revendications

1. Mélange maître destiné à augmenter la résistance à l'état fondu de polyéthylène téréphtalate, dans lequel le mélange maître comprend un polyanhydride, un antioxydant secondaire et au moins un support thermoplastique, le rapport de poids du polyanhydride et de l'antioxydant secondaire étant de 5:1 à 1:5, dans lequel l'antioxydant secondaire est un stabilisant à base de phosphore, dans lequel le polyanhydride est un dianhydride tétracarboxylique, et dans lequel le mélange maître comprend de 0,05 à 20 % en poids du polyanhydride et de 0,05 à 15 % en poids de l'antioxydant secondaire.

2. Mélange maître selon la revendication 1, dans lequel le stabilisant à base de phosphore est sélectionné dans le groupe constitué d'un phosphonite, par exemple tétrakis-(2,4-ditert-butylphényl)-4,4'-biphénylène-diphosphonite ou 2,2'-éthylidènebis(4,6-di-tert-butylphényl)fluorophosphonite, d'un phosphite, par exemple (tris(2,4-di-tert-butylphényl)phosphite), ou bis-(2,4-di-tert-butylphénol)pentaérythritol diphosphite, et d'un phosphonate ; et/ou
dans lequel le dianhydride tétracarboxylique est un dianhydride pyromellitique ou un dianhydride 3,3',4,4'-benzophénonetétracarboxylique ; de préférence le polyanhydride est un dianhydride pyromellitique.

3. Mélange maître selon la revendication 2, dans lequel le stabilisant à base de phosphore est un phosphonite, tel que tétrakis-(2,4-ditert-butylphényl)-4,4'-biphénylène-diphosphonite.

4. Mélange maître selon l'une quelconque des revendications 1 à 3, dans lequel le support est choisi dans le groupe constitué de polyoléfines, par exemple de polyéthylène et/ou de polypropylène, de copolymères éthylène-acrylate, de cires thermoplastiques, de cires de polyoléfine, d'élastomères de polyoléfine, de plastomères de polyoléfine, de polyoléfine greffée d'anhydride maléique, de styrènes, d'ionomères de polyoléfine, tels que des ionomères d'éthylène, de polyesters, tels que du polyéthylène téréphtalate et/ou du polybutylène téréphtalate, de copolymères de polyesters, tels que des copolyesters, d'élastomères thermoplastiques, tels que des esters de polyéther, ou d'amides de polyéther, ou d'un mélange d'au moins deux de ces polymères.

5. Mélange maître selon l'une quelconque des revendications 1 à 4, dans lequel le mélange maître comprend en outre :
- un antioxydant phénolique à encombrement stérique, par exemple 4-((3,5-bis((4-hydroxy-3,5-ditert-butyl-phényl)méthyl)-2,4,6-triméthylphényl)méthyl)-2,6-ditert-butyl-phénol ; et/ou
- une polyoxazoline, par exemple 1,3-phénylène-bis-oxazoline, ou 1,4-phénylène-bis-oxazoline ; et/ou
- 5-(3-phénylprop-2-ynoyl)isobenzofurane-1,3-dione.

6. Article comprenant un polyéthylène téréphtalate, ayant été mélangé à l'état fondu avec le mélange maître selon l'une quelconque des revendications 1 à 5 ; de préférence l'article est une mousse, faisant éventuellement partie d'un rotor d'éolienne, une bouteille, telle qu'une bouteille moulée par soufflage, une barquette, telle qu'une barquette en mousse destinée à être utilisée dans l'industrie alimentaire, un film, une feuille, ou une fibre.

7. Article selon la revendication 6, dans lequel l'article est une mousse, faisant éventuellement partie d'un rotor d'éolienne.

8. Procédé pour augmenter la résistance à l'état fondu d'un polyéthylène téréphtalate, ledit procédé comprenant les étapes consistant à mélanger à l'état fondu un polyanhydride et un antioxydant secondaire avec le polyéthylène téréphtalate, le rapport de poids du polyanhydride et de l'antioxydant secondaire étant de 5:1 à 1:5 ; dans lequel l'antioxydant secondaire est un stabilisant à base de phosphore, et dans lequel le polyanhydride est un dianhydride tétracarboxylique, dans lequel le polyanhydride est mélangé avec le polyéthylène téréphtalate selon une quantité de 0,05 à 0,5 % en poids par rapport au polyester, et/ou dans lequel l'antioxydant secondaire est mélangé avec le polyéthylène téréphtalate selon une quantité de 0,05 à 0,5 % en poids par rapport au polyester thermoplastique.

9. Procédé selon la revendication 8, dans lequel l'étape de mélange à l'état fondu est mise en œuvre dans une extrudeuse à vis.

10. Procédé selon la revendication 8 ou 9, dans lequel le polyanhydride est mélangé avec le polyéthylène téréphtalate selon une quantité de 0,1 à 0,3 % en poids par rapport au polyester et/ou l'antioxydant secondaire est mélangé avec le polyester selon une quantité de 0,1 à 0,3 % en poids par rapport au polyester thermoplastique.

11. Procédé selon l'une quelconque des revendications 8 à 10,
dans lequel le stabilisant à base de phosphore est sélectionné dans le groupe constitué d'un phosphonite, par exemple tétrakis-(2,4-ditert-butylphényl)-4,4'-biphénylène-diphosphonite, ou 2,2'-éthylidènebis(4,6-di-tert-butylphényl)fluorophosphonite, d'un phosphite, par exemple (tris(2,4-di-tert-butylphényl)phosphite), ou bis-(2,4-di-tert-butylphénol)pentaérythritol diphosphite, ou d'un phosphonate ; de préférence l'antioxydant secondaire est un phosphonite, tel que tétrakis-(2,4-ditert-butylphényl)-4,4'-biphénylène-diphosphonite ; et/ou
dans lequel le dianhydride tétracarboxylique est un dianhydride pyromellitique ou un dianhydride 3,3',4,4'-benzophénonetétracarboxylique ; de préférence le polyanhydride est un dianhydride pyromellitique.

12. Procédé selon l'une quelconque des revendications 8 à 11, dans lequel le polyanhydride et l'antioxydant secondaire à mélanger avec le polyéthylène téréphtalate sont utilisés en tant que mélange maître selon l'une quelconque des revendications 1 à 5.
